# FASCICULE DE BREVET EUROPEEN

(11) **EP 1 478 522 B1**
(45) Date de publication et mention de la délivrance du brevet: **07.05.2008**
(21) Numéro de dépôt: 03720647.1
(22) Date de dépôt: 26.02.2003
(51) Int. Cl.: B60B 33/02

(54) **CADRE DE DISPOSITIF A USAGE MEDICAL OU PARAMEDICAL DE SUPPORT ROULANT D UNE PERSONNE, A ROULETTES FACILEMENT DEMONTABLES, ET DISPOSITIF AINSI EQUIPE**
ROLLBARES PATIENTENTRAGEGESTELL FÜR MEDIZINISCHE ANWENDUNG, MIT LEICHT LÖSBAREN ROLLEN UND DAMIT AUSGERÜSTETE VORRICHTUNG
FRAME FOR A DEVICE FOR MEDICAL OR PARAMEDICAL USE AS A ROLLING SUPPORT FOR A PERSON COMPRISING EASILY REMOVABLE ROLLERS AND DEVICE PROVIDED THEREWITH

(30) Priorité: 28.02.2002 FR 0202510
(43) Date de publication de la demande: 24.11.2004
(73) Titulaire: Hill-Rom S.A.S., 56330 Pluvigner (FR)
(72) Inventeur: GIPPERT, Christian, F-56700 HENNEBONT (FR); GUGUIN, Pascal, F-56330 BRECH (FR)
(74) Mandataire: Barbin le Bourhis, Joël
(86) Numéro de dépôt international: PCT/FR2003/000625
(87) Numéro de publication internationale: WO 2003/072373

(56) Documents cités:
- WO-A-00/51830
- FR-A- 2 783 463
- US-A- 5 457 849
- US-A- 5 737 801

## Description

La présente invention se rapporte à un cadre de dispositif à usage médical ou paramédical de support roulant d'une personne, tel qu'un lit, un fauteuil ou un brancard, et à un dispositif équipé d'un tel cadre.

Des lits avec des roulettes destinées à faciliter leur déplacement équipent désormais la totalité des établissements hospitaliers. Par l'expression "établissements hospitaliers", on entend aussi bien les hôpitaux proprement dits que d'autres institutions qui délivrent des soins médicaux, paramédicaux ou de confort, telles que les maisons de repos, les centres de cure, etc.

De tels lits sont notamment constitués d'un cadre auquel sont fixées lesdites roulettes, ce cadre supportant le sommier ainsi que tous les autres équipements qui constituent le lit proprement dit.

Le cadre s'inscrit généralement dans un rectangle allongé et les angles de ce rectangle sont le plus souvent reliés par paire, par un profilé généralement métallique et par exemple creux et de section carrée.

Ainsi, dans certaines formes de réalisation, les quatre profilés constituant le cadre matérialisent les quatre côtés dudit rectangle. Dans d'autres formes de réalisation, deux profilés matérialisent les bords transversaux dudit rectangle, tandis que deux profilés longitudinaux s'étendent parallèlement l'un à l'autre et sont fixés aux profilés transversaux, avec un écartement inférieur à la longueur des profilés transversaux.

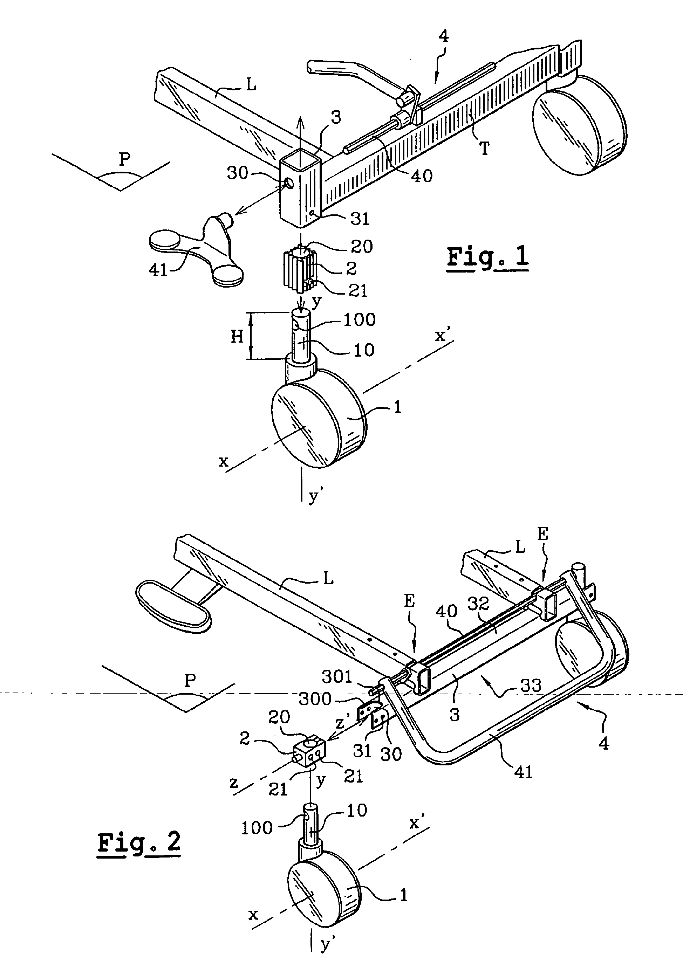

C'est cette dernière version d'un cadre qui a été représentée à la figure 1 annexée et qui constitue l'état de la technique sur lequel se base la présente invention. Il s'agit d'un cadre de lit représenté partiellement en perspective.

Sur cette figure, on note particulièrement la présence d'un profilé transversal **T** qui se situe par exemple dans la région du pied du lit, et d'un des profilés longitudinaux **L.**

Ces deux profilés, ainsi que les deux autres non représentés s'étendent dans un même plan **P** qui, lorsque le lit est en appui au sol, est parallèle à ce dernier.

A l'extrémité visible du profilé T est fixé, par exemple par soudage, une portion de profilé 3 qui s'étend perpendiculairement au plan P. Elle matérialise l'un des sangles du rectangle dans lequel s'inscrit le cadre.

Quand le lit est en appui au sol, cette portion de profilé est donc verticale. Il s'agit d'un profilé creux de section carrée. Il présente sur deux de ses faces parallèles et dans sa partie supérieure, une ouverture circulaire 30. Ces ouvertures, en regard l'une de l'autre, sont prévues sur la face tournée vers le profilé T, ainsi que sur la face opposée. Par ailleurs, cette portion de profilé comporte sur ses deux autres faces et dans sa partie inférieure, une paire d'ouvertures circulaires 31 se faisant face 31. Elles est d'un diamètre plus réduit que celui des ouvertures 30.

Un tel cadre de lit est équipé de roulettes du commerce telles que celles représentées à la figure 1. Cette roulette 1 est mobile en rotation autour de son propre axe XX' et autour d'un pivot cylindrique 10 d'axe perpendiculaire YY' qui, dans la situation représentée à la figure, s'étend verticalement. Ainsi que cela est bien connu, la rotation de la roulette autour du pivot permet de lui donner des orientations quelconques.

On notera que le pivot est percé d'une ouverture traversante 100 qui s'étend selon une direction diamétrale, perpendiculaire à son axe longitudinal.

Au pivot 10 est associée une pièce dite de montage 2 de section extérieure carrée. Cette pièce est traversée par un alésage cylindrique débouchant 20 qui s'étend selon sa direction longitudinale. Le diamètre de l'alésage est prévu de telle manière que le pivot 10 de la roulette 1 puisse y coulisser.

Cette pièce intermédiaire présente des dimensions complémentaires de celles de la portion de profilé 3, de sorte que lorsque la pièce intermédiaire est engagée sur le pivot, l'ensemble peut être mis en place de bas en haut parallèlement à l'axe YY', à l'intérieur de la portion de profilé 3. Des vis non représentées peuvent alors être engagées dans les ouvertures 31 de la portion de profilé et s'engager dans des ouvertures correspondantes 21 prévues dans la pièce intermédiaire 2.

Dans l'exemple représenté ici, le cadre de lit est équipé d'un système de frein 4 comportant une tige transversale de section hexagonale dont les extrémités s'engagent dans les ouvertures opposées 30 de la portion de profilé 3. A chacune desdites extrémités de la tige est associée une pédale 41 dont l'actionnement provoque la rotation de la tige 40 sur son propre axe, ce qui sollicite des moyens de freinage de la roulette, intégrés à l'intérieur du pivot 100 et non représentés.

Ce genre de cadre donne généralement satisfaction.

Toutefois, lorsque l'on souhaite monter ou démonter une roulette 1, par exemple parce qu'elle est usée et qu'on souhaite la changer, il est obligatoire; après avoir démonté la pédale 41, de soulever le lit de la valeur **H** correspondant à la hauteur du pivot ou de coucher le lit sur le côté. On peut alors déplacer légèrement la tige 40 pour l'amener dans la position illustrée à la figure 1 et enfin extraire la roue 1 et son pivot 10 par le bas, après avoir desserré les vis engagées dans les ouvertures 31 et 21. On comprend qu'une telle manoeuvre est délicate à effectuer. Elle demande au moins deux opérateurs pour être mise en oeuvre facilement, dans la mesure où c'est l'ensemble du lit qu'il faut soulever ou faire basculer.

Le document US-A-5,457,849 se rapporte non pas à un dispositif à usage médical ou paramédical, mais au déplacement d'ordinateurs de poids élevé.

Le problème à résoudre est celui occasionné par le déplacement de tels ordinateurs qui, préalablement, ont été fixés ou simplement déposés directement au sol.

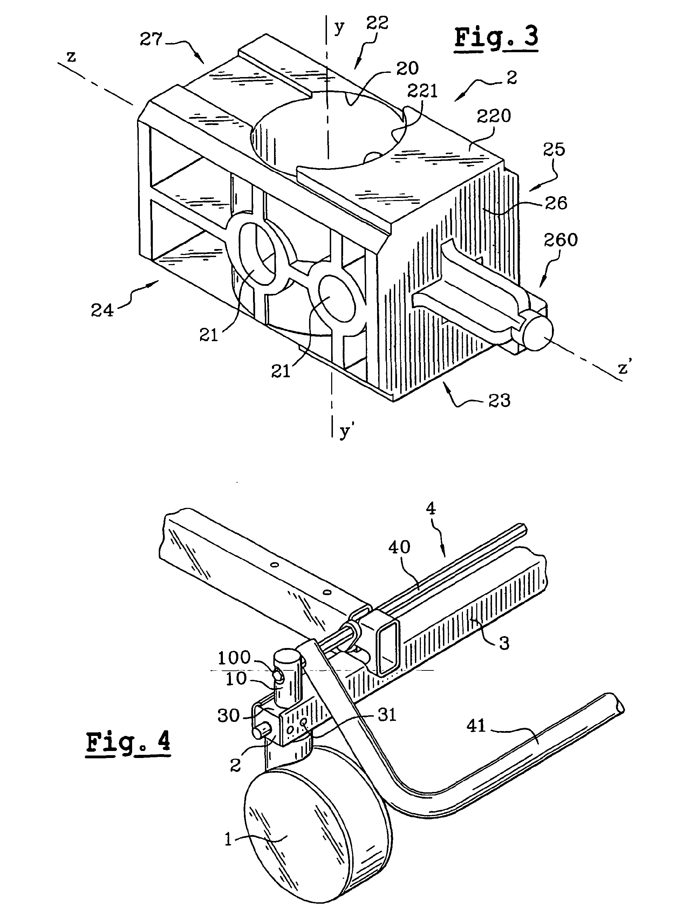

Pour en permettre le déplacement, ces ordinateurs reçoivent une pièce de montage (visible notamment sur la figure 3) sur laquelle vient se placer, selon un mouvement horizontal, un insert parallélépipédique pourvu d'une roulette, solidaire d'une tige filetée à hauteur réglable.

Ainsi, lorsqu'on souhaite déplacer l'ordinateur, on met en place des pièces de montage à chacun de ses angles et on les y solidarise par une série de vis. On introduit alors les inserts dans ces pièces de montage de manière à ce que la tige filetée déborde au maximum de l'insert. On actionne alors cette tige filetée de façon à provoquer une élévation de l'ordinateur par rapport au sol.

Une fois l'ordinateur déplacé et affecté à son nouveau lieu, on l'abaisse au niveau du sol et on démonte les inserts.

La présente invention a pour but d'apporter une solution au problème évoqué plus haut en proposant un cadre de dispositif à usage médical ou paramédical de support roulant d'une personne, tel qu'un lit, du type généralement décrit ci-dessus, dont on peut enlever ou mettre en place l'une ou l'autre de ses roulettes sans avoir à soulever ou faire basculer l'ensemble dudit dispositif.

Il s'agit donc d'un cadre qui s'inscrit sensiblement dans un rectangle dont les angles sont reliés par paire par un profilé, et qui est muni, à chacun desdits angles, d'une roulette d'appui au sol, mobile en rotation sur son propre axe et autour d'un pivot qui s'étend verticalement lorsque la roulette est en appui au sol, le pivot étant reçu dans l'ouverture traversante d'une pièce de montage formant fourreau, solidaire d'un profilé.

Selon l'invention, lesdits profilés présentent, au niveau des régions opposées supérieure et inférieure de leurs extrémités creuses recevant les roulettes, des échancrures, que ladite pièce de montage présente une forme générale complémentaire de celle de la section dudit profilé, et qu'elle est reçue dans ladite extrémité selon une direction parallèle au plan général dans lequel sont contenus les profilés, le pivot s'étendant alors de part et d'autre de la pièce de montage, au travers desdites échancrures, de sorte que lorsque lesdites roulettes sont en appui au sol, il est possible d'enlever et/ou mettre en place une pièce de montage équipée de ses pivot et roulette associés, sans soulèvement des profilés.

De ce qui précède, on comprend que le montage et le démontage des roulettes se fait strictement dans un plan parallèle à celui qui contient le cadre, de sorte qu'il n'y a absolument pas à déplacer le dispositif, celui-ci pouvant rester en appui sur le sol par ses trois autres roulettes.

Selon d'autres caractéristiques avantageuses mais non limitatives de l'invention :
- ladite pièce de montage comporte une butée apte à limiter son enfoncement dans ladite extrémité ;
- lesdits profilés ont une section carrée ou rectangulaire, lesdites échancrures étant alors prévues dans les parois de leurs faces inférieure et supérieure opposées ;
- ladite butée consiste en une surépaisseur de matière sur une partie de la face supérieure de la pièce de montage, cette surépaisseur étant destinée à venir s'appuyer contre le rebord de ladite échancrure ;
- ladite surépaisseur et ladite échancrure présentent une partie courbe complémentaire, de sorte que lorsqu'elles sont en appui l'une contre l'autre, les parties courbes matérialisent un cercle qui se superpose à l'ouverture traversante de ladite pièce de montage ;
- ladite pièce de montage est munie d'un téton formant saillie vers l'extérieur, qui constitue un moyen de préhension pour la mise en place ou l'enlèvement de la pièce de montage ;
- il comporte des moyens de fixation de la pièce de montage au profilé correspondant ;
- au moins un des pivots est associé un système de freinage de la roulette correspondante ;
- une paire de pivots est équipée dudit système de freinage, ce dernier étant actionné par rotation sur elle-même d'une barre de section hexagonale qui traverse chacun desdits pivots.

Par ailleurs, la présente invention se rapporte également à un dispositif à usage médical ou paramédical de support roulant d'une personne équipé d'un cadre tel que décrit ci-dessus.

D'autres caractéristiques et avantages de la présente invention apparaîtront à la lecture de la description qui va suivre d'un mode de réalisation préférentiel mais non limitatif.

Cette description sera faire en référence aux dessins annexés dans lesquels :
- la figure 2 est une vue analogue à la figure 1, montrant en perspective une partie d'un cadre de lit conforme à la présente invention ;
- la figure 3 est une vue en perspective de la pièce de montage qui équipe ce cadre ;
- la figure 4 est une vue similaire à celle de la figure 2, après montage de la roulette et de ses pivots et pièces de montage associées sur le profilé correspondant.

Le cadre de lit représenté partiellement à la figure 2 est du même type général que le précédent. Il comporte deux profilés longitudinaux L qui s'appuient et sont fixés sur la face supérieure 32 de deux profilés transversaux 3 de plus petite longueur et dont un seul est visible sur la figure.

Il s'agit de profilés creux de section carrée. Toutefois, dans des modes de réalisation différents, la section desdits profilés pourrait avoir une autre forme, par exemple circulaire.

Comme le montrent les figures 2 et 4, les extrémités opposées du profilé transversal 3 présentent au niveau de ses faces supérieure 32 et inférieure 33, une échancrure référencée 30. Il s'agit ici d'une découpe réalisée dans lesdites parois qui présente deux bords parallèles 300 débouchant sur ladite extrémité et qui se raccordent par une partie en arc de cercle 301.

Les deux autres parois du profilé présentent, dans la région des échancrures 30 une paire de trous circulaires se faisant face 31, dont on expliquera plus loin la fonction.

A chaque extrémité du profilé 3 est associée une pièce de montage 2 représentée en perspective et en détail à la figure 3.

Il s'agit d'une pièce réalisée par exemple par moulage d'une matière plastique. Elle présente une forme qui s'inscrit dans un parallélépipède rectangle allongé et dont la section droite correspond, au jeu près, à la section droite dudit profilé 3. Ses faces supérieure et inférieure sont référencées 22 et 23, tandis que ses faces latérales sont référencées 24 et 25. Enfin, ses faces avant et arrière sont respectivement répertoriées 26 et 27.

On a référencé **ZZ'** l'axe médian longitudinal de la pièce et par **YY'** l'axe perpendiculaire à ce dernier.

La pièce 2 est traversée par une ouverture circulaire 20 qui débouche sur ses faces supérieure 22 et inférieure 23.

Ses faces latérales 24 et 25 sont quant à elles pourvues d'alésages 21 dont la disposition et le diamètre correspondent exactement à celles des ouvertures 31 du profilé.

Sur sa face avant 26, la pièce 2 comporte un téton faisant saillie 260 qui s'étend selon l'axe **ZZ'.**

Sur la face supérieure 22 s'étend, depuis le rebord de la phase 26 jusqu'au rebord de l'ouverture 20 une surépaisseur de matière 220 formant butée, dont on expliquera plus loin la fonction.

Le diamètre de l'ouverture 20 est, comme montré à la figure 2, prévu pour recevoir à coulissement, le pivot 10 d'une roulette 1. La hauteur de ce pivot est suffisante pour qu'il traverse et débouche au-dessus de la pièce de montage.

Lorsque ce prémontage est réalisé, il suffit alors de déplacer l'ensemble selon une direction parallèle à l'axe **ZZ'** vers l'extrémité correspondante du profilé 3. Ce mouvement se fait donc selon une direction parallèle au plan général **P** dans lequel sont contenus les profilés.

Le mouvement est simple à réaliser puisqu'il suffit d'engager la face 27 de la pièce de montage dans l'extrémité du profilé 3 puis d'effectuer un mouvement de poussée. La présence du pivot 10 associé à la pièce fait que ce mouvement est limité par l'appui de ce pivot contre le rebord courbe de l'échancrure 30. Par ailleurs, la surépaisseur 220 assure qu'il n'y ait pas de différences de niveau entre la face supérieure 32 du profilé et ladite pièce.

Pour compléter ce montage, il suffit de mettre en place des vis dans les ouvertures 31 et 21 du profilé et de la pièce de montage.

On comprend aisément que grâce à ces caractéristiques, si l'une des roulettes est à changer, l'opération d'enlèvement et de remise en place peut être réalisée simplement sans soulèvement du cadre, celui-ci reposant à terre par ses trois autres roulettes.

Dans le mode de réalisation présenté ici, le cadre est associé à un système de frein avec une tige transversale à section hexagonale qui est engagée dans des encoches **E** ménagées dans les faces supérieures des longerons **L.** Non loin des extrémités de cette tige est montée une pédale en forme de "U" 41, les extrémités restantes de la tige étant engagées, comme dans le dispositif décrit en référence à la figure 1, dans les ouvertures 100 prévues dans les pivots 10. Par actionnement de la pédale 41, on fait pivoter d'une fraction de tour sur elle-même la tige 40, ce qui actionne un mécanisme de freinage intégré dans le pivot de la roulette.

La description qui précède a été exclusivement faite en référence à un cadre de lit hospitalier. Toutefois, comme déjà précisé, la présente invention s'applique à d'autres dispositifs à usage médical ou paramédical de support roulant d'une personne, tels que des brancards ou des fauteuils.

## Revendications

1. Cadre de dispositif à usage médical ou paramédical de support roulant d'une personne, tel qu'un lit, un fauteuil ou un brancard, qui s'inscrit sensiblement dans un rectangle dont les angles sont reliés par paire par un profilé (3), et qui est muni, à chacun desdits angles, d'une roulette d'appui (1) au sol, mobile en rotation sur son propre axe **(XX')** et autour d'un pivot (10) qui s'étend verticalement lorsque la roulette (1) est en appui au sol, le pivot (10) étant reçu dans l'ouverture traversante (20) d'une pièce de montage (2) formant fourreau, solidaire d'un profilé (3), **caractérisé par le fait que** lesdits profilés (3) présentent, au niveau des régions opposées supérieure et inférieure (32, 33) de leurs extrémités creuses recevant les roulettes (1), des échancrures (30), que ladite pièce de montage (2) présente une forme générale complémentaire de celle de la section dudit profilé (3), et qu'elle est reçue dans ladite extrémité selon une direction **(ZZ')** parallèle au plan général **(P)** dans lequel sont contenus les profilés (3), le pivot (10) s'étendant alors de part et d'autre de la pièce de montage (2), au travers desdites échancrures (30), de sorte que lorsque lesdites roulettes (1) sont en appui au sol, il est possible d'enlever et/ou mettre en place une pièce de montage (2) équipée de ses pivot (10) et roulette (1) associés, sans soulèvement des profilés (3).

2. Cadre de dispositif à usage médical ou paramédical de support roulant d'une personne selon la revendication 1, **caractérisé par le fait que** ladite pièce de montage (2) comporte une butée (220) apte à limiter son enfoncement dans ladite extrémité.

3. Cadre selon la revendication 1 ou 2, **caractérisé par le fait que** lesdits profilés (3) ont une section carrée ou rectangulaire, lesdites échancrures (30) étant alors prévues dans les parois de leurs faces inférieure (33) et supérieure (32) opposées.

4. Cadre selon les revendications 3 et 4 prises en combinaison, **caractérisé par le fait que** ladite butée (220) consiste en une surépaisseur de matière sur une partie de la face supérieure de la pièce de montage (22), cette surépaisseur étant destinée à venir s'appuyer contre le rebord de ladite échancrure (30).

5. Cadre selon la revendication 4, **caractérisé par le fait que** ladite surépaisseur (220) et ladite échancrure (30) présentent une partie courbe complémentaire (221, 301), de sorte que lorsqu'elles sont en appui l'une contre l'autre, les parties courbes (221, 301) matérialisent un cercle qui se superpose à l'ouverture (20) traversante de ladite pièce de montage (2).

6. Cadre selon l'une des revendications 1 à 5, **caractérisé par le fait que** ladite pièce de montage (2) est munie d'un téton (260) formant saillie vers l'extérieur, qui constitue un moyen de préhension pour la mise en place ou l'enlèvement de la pièce de montage (2).

7. Cadre selon l'une des revendications 1 à 6, **caractérisé par le fait qu'**il comporte des moyens de fixation de la pièce de montage (2) au profilé (3) correspondant.

8. Cadre selon l'une des revendications 1 à 7, **caractérisé par le fait qu'**à au moins un des pivots (10) est associé un système de freinage (4) de la roulette correspondante (1).

9. Cadre selon la revendication 8, **caractérisé par le fait qu'**une paire de pivots (10) est équipée dudit système de freinage (4), ce dernier étant actionné par rotation sur elle-même d'une barre de section hexagonale (40) qui traverse chacun desdits pivots.

10. Dispositif à usage médical ou paramédical de support roulant d'une personne équipé d'un cadre selon l'une des revendications 1 à 9.

## Claims

1. Frame for a device for medical or paramedical use as a rolling support for a person, such as a bed, a chair or a trolley stretcher, which frame is substantially in the form of a rectangle, whose angles are connected in pairs by means of a profile (3), and is provided, at each of said angles, with a roller (1) which bears on the ground and is movable in rotation about its own axis (XX') and about a pivot (10) that extends vertically when the roller (1) is bearing on the ground, the pivot (10) being received in the through-opening (20) of an assembly piece (2) that forms a sleeve and is integrally connected to a profile (3), **characterized in that** said profiles (3) comprise recesses (30) at the opposite upper and lower regions (32, 33) of their hollow ends receiving the rollers (1), and **in that** said assembly piece (2) has a shape generally complementing that of the cross-section of said profile (3) and is received in said end in a direction (ZZ') parallel to the general plane (P) in which the profiles (3) are contained, the pivot (10) then extending from one end to the other of the assembly piece (2) through said recesses (30), in such a way that when said rollers (1) are bearing on the ground, it is possible to remove and/or insert an assembly piece (2) equipped with its pivot (10) and roller (1) without lifting the profiles (3).

2. Frame for a device for medical or paramedical use as a rolling support for a person according to Claim 1, **characterized in that** said assembly piece (2) comprises a limit stop (220) for limiting its insertion into said end.

3. Frame according to Claim 1 or 2, **characterized in that** said profiles (3) have a square or rectangular cross section, said recesses (30) then being provided in the walls of their opposite lower face (33) and upper face (32).

4. Frame according to Claims 3 and 4 in combination, **characterized in that** said limit stop (220) is formed by an additional thickness of material on part of the upper face of the assembly piece (22), this additional thickness being intended to bear against the edge of said recess (30).

5. Frame according to Claim 4, **characterized in that** said additional thickness (220) and said recess (30) have a complementary curved part (221, 301), such that when they are bearing against each other, the curved parts (221, 301) form a circle which is superposed on the through-opening (20) of said assembly piece (2).

6. Frame according to one of Claims 1 to 5, **characterized in that** said assembly piece (2) is provided with an outwardly projecting stub (260) which constitutes a gripping means for insertion or removal of the assembly piece (2).

7. Frame according to one of Claims 1 to 6, **characterized in that** it comprises means for fixing the assembly piece (2) to the corresponding profile (3).

8. Frame according to one of Claims 1 to 7, **characterized in that** at least one of the pivots (10) is connected to a system (4) for braking the corresponding roller (1).

9. Frame according to Claim 8, **characterized in that** a pair of pivots (10) is equipped with said braking system (4), the latter being actuated via a bar (40) of hexagonal cross section that rotates about itself and passes through each of said pivots.

10. Device for medical or paramedical use as a rolling support for a person, equipped with a frame according to one of Claims 1 to 9.

## Patentansprüche

1. Rahmen einer rollbaren Personentragevorrichtung für medizinische oder paramedizinische Anwendungen, wie etwa eines Bettes, eines Sessels oder einer Trage, welcher sich im wesentlichen in ein Rechteck einbeschreiben läßt, dessen Ecken paarweise durch ein Profilteil (3) verbunden sind, und welcher an jeder dieser Ecken mit einer Fußrolle (1) ausgestattet ist, die drehbeweglich um ihre eigene Achse (XX') und um einen Drehzapfen (10) ist, welcher sich vertikal erstreckt, wenn die Rolle (1) auf den Fußboden abgestützt ist, wobei der Drehzapfen (10) in der Durchgangsbohrung (20) eines eine Hülse bildenden Montageteils (2) aufgenommen wird, das mit einem Profilteil (3) fest verbunden ist, **dadurch gekennzeichnet, daß** die Profilteile (3) in den oberen und unteren Bereichen (32, 33) ihrer die Rollen (1) aufnehmenden hohlen Enden Aussparungen (30) aufweisen, daß das Montageteil (2) eine allgemeine Form aufweist, die zu der des Querschnitts des Profilteils (3) komplementär ist, und daß es in dem Ende entlang einer Richtung (ZZ') aufgenommen wird, die zu der Hauptebene (P) parallel ist, in welcher die Profilteile (3) enthalten sind, wobei der Drehzapfen (10) sich dann beiderseits des Montageteils (2) erstreckt, durch die Aussparungen (30) hindurch, derart, daß, wenn die Rollen (1) auf den Fußboden abgestützt sind, es möglich ist, ein mit seinem zugehörigen Drehzapfen (10) und seiner zugehörigen Rolle (1) ausgestattetes Montageteil (2) zu entfernen und/oder anzubringen, ohne die Profilteile (3) anzuheben.

2. Rahmen einer rollbaren Personentragevorrichtung für medizinische oder paramedizinische Anwendungen nach Anspruch 1, **dadurch gekennzeichnet, daß** das Montageteil (2) ein Widerlager (220) aufweist, das geeignet ist, sein Eindrücken in das Ende zu begrenzen.

3. Rahmen nach Anspruch 1 oder 2, **dadurch gekennzeichnet, daß** die Profilteile (3) einen quadratischen oder rechteckigen Querschnitt aufweisen, wobei die Aussparungen (30) dann in den Wänden ihrer einander gegenüberliegenden Unterseite (33) und Oberseite (32) vorgesehen sind.

4. Rahmen nach Anspruch 3 und 4 in ihrer Kombination, **dadurch gekennzeichnet, daß** das Widerlager (220) aus einer Verdickung des Materials auf einem Teil der Oberseite des Montageteils (22) besteht, wobei diese Verdickung dazu bestimmt ist, sich an dem Rand der Aussparung (30) abzustützen.

5. Rahmen nach Anspruch 4, **dadurch gekennzeichnet, daß** die Verdickung (220) und die Aussparung (30) komplementäre gekrümmte Abschnitte (221, 301) aufweisen, derart, daß, wenn sie aneinander anstoßen, die gekrümmten Abschnitte (221, 301) einen Kreis bilden, welcher sich der Durchgangsbohrung (20) des Montageteils (2) überlagert.

6. Rahmen nach einem der Ansprüche 1 bis 5, **dadurch gekennzeichnet, daß** das Montageteil (2) mit einem nach außen vorspringenden Ansatz (260) ausgestattet ist, welcher ein Greifmittel für die Anbringung oder das Entfernen des Montageteils (2) darstellt.

7. Rahmen nach einem der Ansprüche 1 bis 6, **dadurch gekennzeichnet, daß** er Mittel zur Befestigung des Montageteils (2) an dem entsprechenden Profilteil (3) aufweist.

8. Rahmen nach einem der Ansprüche 1 bis 7, **dadurch gekennzeichnet, daß** mindestens einer der Drehzapfen (10) mit einem Bremssystem (4) der entsprechenden Rolle (1) gekoppelt ist.

9. Rahmen nach Anspruch 8, **dadurch gekennzeichnet, daß** ein Paar von Drehzapfen (10) mit dem Bremssystem (4) ausgestattet ist, wobei das Letztere durch Drehung einer Stange mit sechseckigem Querschnitt (40), welche jeden der Drehzapfen durchquert, um die eigene Achse betätigt wird.

10. Rollbare Personentragevorrichtung für medizinische oder paramedizinische Anwendungen, die mit einem Rahmen nach einem der Ansprüche 1 bis 9 ausgerüstet ist.
